# EUROPEAN PATENT APPLICATION

(11) **EP 4 589 053 A1**
(43) Date of publication of application: **23.07.2025**
(21) Application number: 23864974.3
(22) Date of filing: 28.04.2023
(51) Int. Cl.: C25B 11/067, C25D 11/34, C25F 3/22

(54) **ELECTRODE AND ALKALI WATER ELECTROLYTIC DEVICE INCLUDING SAME**

(30) Priority: 13.09.2022 JP 2022145255
(71) Applicant: SUMITOMO ELECTRIC INDUSTRIES, LTD., Osaka-shi, Osaka 541-0041 (JP)
(72) Inventor: HIGASHINO, Takahiro, Osaka-shi, Osaka 541-0041 (JP); OKUNO, Kazuki, Osaka-shi, Osaka 541-0041 (JP); TAWARAYAMA, Hiromasa, Osaka-shi, Osaka 541-0041 (JP); HOSOE, Akihisa, Osaka-shi, Osaka 541-0041 (JP)
(74) Representative: Boult Wade Tennant LLP
(86) International application number: PCT/JP2023/016891
(87) International publication number: WO 2024/057608

(57) **Abstract**

An electrode, including: a substrate that has a surface composed of at least one of nickel, nickel oxide, and nickel hydroxide; and scale-like protruding parts provided on the surface of the substrate.

## Description

### TECHNICAL FIELD

The present disclosure relates to an electrode and an alkaline water electrolysis apparatus including the same. The present application claims a priority based on Japanese Patent Application No. 2022-145255, filed on September 13, 2022. The content described in this Japanese patent application is entirely incorporated herein by reference.

### BACKGROUND ART

Toward achievement of the carbon neutral, hydrogen has attracted attention as a next-generation energy source. Hydrogen can be manufactured by alkaline water electrolysis. In an alkaline water electrolysis apparatus, a larger surface area of an electrode lowers electrolysis voltage to reduce electric power required for hydrogen generation.

PTL 1 discloses art of using a metal porous body that has a large surface area as the electrode of the alkaline water electrolysis apparatus.

### CITATION LIST

### PATENT LITERATURE

PTL 1: WO 2019/163256

### SUMMARY OF INVENTION

An electrode of the present disclosure is an electrode that comprises:
a substrate that has a surface composed of at least one of nickel, nickel oxide, and nickel hydroxide; and
scale-like protruding parts provided on the surface of the substrate.

An alkaline water electrolysis apparatus of the present disclosure is an alkaline water electrolysis apparatus that comprises the above electrode.

### BRIEF DESCRIPTION OF DRAWINGS

Fig. 1 is an example of an FE-SEM image (magnification: 300) of a surface of an electrode according to Embodiment 1.
Fig. 2 is an example of an FE-SEM image (magnification: 30,000) of the surface of the electrode according to Embodiment 1.
Fig. 3 is an example of an FE-SEM image (magnification: 30,000) of a cross section of the electrode according to Embodiment 1.
Fig. 4 is a view for describing a method for measuring a number of scale-like protruding parts.
Fig. 5 is a schematic view of an example of an electrode-manufacturing device used for a method for manufacturing the electrode of Embodiment 1.
Fig. 6 is a graph that indicates an example of a relationship between a density of flow in a working electrode and a time in forward/reverse inversion electrolysis.
Fig. 7 is a schematic view of another example of the electrode-manufacturing device used for the method for manufacturing the electrode of Embodiment 1.
Fig. 8 is a schematic view that illustrates an example of an alkaline water electrolysis apparatus of Embodiment 2.

### DETAILED DESCRIPTION

### [Problem to be Solved by the Present Disclosure]

Electric power required for hydrogen generation of the alkaline water electrolysis apparatus has been further required in recent years to be reduced from the viewpoints of the carbon neutral and energy saving. To reduce the required electric power, an electrode that has a larger specific surface area than that of conventional electrodes has been required.

Accordingly, an object of the present disclosure is to provide the electrode that has a larger specific surface area than that of conventional electrodes and an alkaline water electrolysis apparatus that has this electrode.

### [Advantageous Effect of the Present Disclosure]

According to the present disclosure, the electrode that has a larger specific surface area than that of conventional electrodes and the alkaline water electrolysis **apparatus** that has this electrode can be provided.

### [Description of Embodiments]

First, embodiments of the present disclosure will be listed and described.
(1) An electrode of the present disclosure is an electrode comprising:
   a substrate that has a surface composed of at least one of nickel, nickel oxide, and nickel hydroxide; and
   scale-like protruding parts provided on the surface of the substrate.

The electrode of the present disclosure has a large specific surface area compared with conventional electrodes. Therefore, when this electrode is used as the electrode of the alkaline water electrolysis apparatus, for example, electrolysis voltage can be lowered to reduce the required electric power. The specific surface area herein means a surface area per unit mass of the electrode.

(2) According to the (1), a surface-area increasing rate of the electrode may be 8% or more. The surface-area increasing rate is measured with an atomic force microscope.

This further increases the specific surface area of the electrode.
(3) According to the (1) or (2), in an image in which the surface is observed by using a field-emission scanning electron microscope with a magnification of 30,000, a number of the scale-like protruding parts is preferably 5 or more per 2 µm. This further increases the specific surface area of the electrode.
(4) According to any one of the (1) to (3), the electrode preferably comprises a first main surface and a second main surface on an opposite side to the first main surface,
   a carbon tape for evaluation preferably contains scale-like adhering materials, the carbon tape for evaluation being obtained by adhering a rectangular carbon tape with 5 mm × 5 mm to each of the first main surface and the second main surface and then peeling the carbon tape from the first main surface and the second main surface, and
   at least one of the adhering materials preferably has a maximum diameter of 50 nm or more and a maximum thickness of 20% or less of the maximum diameter.

This confirms the presence of the scale-like protruding parts on the surface of the substrate of the electrode.
(5) According to any one of the (1) to (4), a surface of the electrode preferably contains nickel. This can yield high activity for oxygen generation and hydrogen generation.
(6) According to any one of the (1) to (5), a shape of the substrate is preferably a plate, a two-dimensional porous body, a three-dimensional porous body, or a mesh. This further increases the specific surface area of the electrode.
(7) According to any one of the (1) to (5), a shape of the substrate is preferably a three-dimensional porous body. This further increases the specific surface area of the electrode.
(8) An alkaline water electrolysis apparatus of the present disclosure is an alkaline water electrolysis apparatus comprising the electrode according to any one of the (1) to (7).

The alkaline water electrolysis apparatus of the present disclosure can lower electrolysis voltage to reduce the electric power required for hydrogen generation. The electric power required for hydrogen generation herein means electric power consumption used for electrolysis in manufacture of 1 Nm³ of hydrogen. This required electric power excludes electric power for feeding an alkali solution with a pump, electric power for purifying and compressing the generated hydrogen gas and oxygen gas, and the like.

### [Detail of Embodiments of the Present Disclosure]

Specific examples of the electrode of the present disclosure and the alkaline water electrolysis apparatus that has the same will be described hereinafter with reference to the drawings. In the drawings of the present disclosure, a same reference sign represents same parts or corresponding parts. The size relationship such as length, width, thickness, and depth are appropriately modified for clarifying and simplifying the drawings, and not necessarily represents an actual size relationship.

A description of a form "A to B" herein means an upper and lower limits of a range (that is, A or more and B or less). When A has no description of a unit and only B has a description of a unit, the unit of A and the unit of B are same.

When a compound and the like are represented by a chemical formula herein, any conventionally known atomic ratios are included unless the atomic ratio is particularly limited, and should not be necessarily limited to an atomic ratio within a stoichiometric range.

When one or more values are each described herein as lower limits of numerical ranges and upper limits of numerical ranges, combinations of any one value described as the lower limit and any one value described as the upper limit are also disclosed. For example, when a1 or more, b1 or more, and c1 or more are described as lower limits and a2 or less, b2 or less, and c2 or less are described as upper limits, disclosed are a1 or more and a2 or less, a1 or more and b2 or less, a1 or more and c2 or less, b11 or more and a2 or less, b11 or more and b2 or less, b11 or more and c2 or less, c1 or more and a2 or less, c1 or more and b2 or less, and c1 or more and c2 or less.

### [Embodiment 1: Electrode]

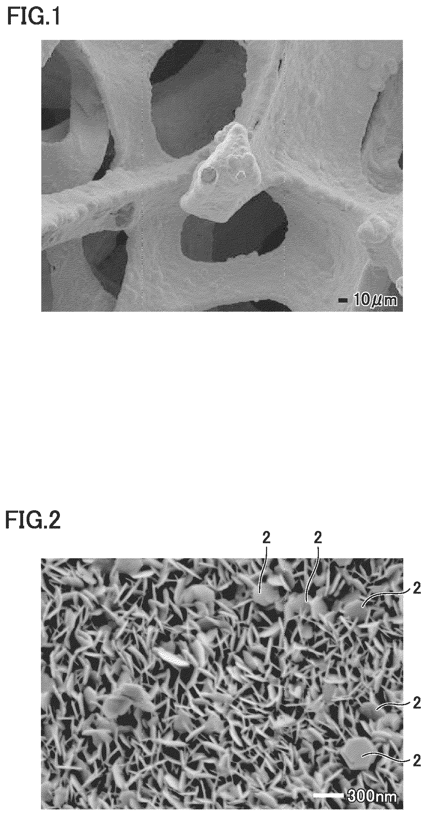

The electrode of one embodiment of the present disclosure (hereinafter, also referred to as "Embodiment 1") will be described by using Fig. 1 to Fig. 7. The electrode of the present disclosure comprises: a substrate that has a surface composed of at least one of nickel, nickel oxide, and nickel hydroxide; and scale-like protruding parts provided on the surface of the substrate. The electrode of the present disclosure has a large specific surface area compared with conventional electrodes. Therefore, when this electrode is used as the electrode of the alkaline water electrolysis apparatus, for example, electrolysis voltage can be lowered to reduce the electric power required for hydrogen generation.

### <Substrate>

In the electrode of Embodiment 1, a surface of the substrate is composed of at least one of nickel (Ni), nickel oxide (NiO), and nickel hydroxide (Ni(OH)₂). The substrate can be entirely composed of at least one of nickel, nickel oxide, and nickel hydroxide. The substrate has the surface composed of at least one of nickel, nickel oxide, and nickel hydroxide, and an inner side of the surface may have different composition from the surface. Examples thereof include a nickel-plated steel plate in which a nickel-plating layer is provided on ferrite.

A method for specifying the composition of the surface of the substrate is as follows. The electrode is embedded with a resin, and cut along the normal line direction of the surface of the substrate with a diamond wire saw or the like to expose a cross section of the substrate. The cross section of the substrate is analyzed by SEM-EDX (energy-dispersive X-ray spectrometry) to specify elements present in a region within 1 µm from the surface of the substrate. When only nickel and carbon are present in this region, the surface of the substrate is determined to be composed of nickel. When only nickel, oxygen, and carbon are present in this region, the surface of the substrate is determined to be composed of at least one of nickel, nickel oxide, and nickel hydroxide. Here, carbon is an impurity that may be mixed in the manufacturing step. The SEM-EDX cannot quantify hydrogen. Thus, a method for confirming the composition of the surface of the substrate that contains nickel hydroxide is as follows. Each of the surface of the substrate and exposed surfaces obtained by sputtering to a depth of 20 nm from the surface with an interval of 2 nm is analyzed by XPS (X-ray photoelectron spectrometry) to obtain an XPS spectrum of each of the surface of the substrate and the exposed surfaces. When a peak is present at a position of a bonding energy of 855±0.4 eV that corresponds to Ni(OH)₂ in at least any one of these XPS spectra, the composition of the surface of the substrate is determined to contain nickel hydroxide.

The electrode of Embodiment 1 comprises the scale-like protruding parts provided on the surface of the substrate. This increases the specific surface area of the electrode.

The electrode that contains the scale-like protruding parts provided on the surface of the substrate is confirmed by observing the surface and the cross section of the electrode with a field-emission scanning electron microscope (FE-SEM, acceleration voltage: 3.0 kV, irradiation current: 1.0 nA). The specific confirming method is as follows. First, a presence region of the substrate is specified in a first image obtained by observing the surface of the electrode with a magnification of 300. Next, the presence region of the substrate in the first image is observed with a magnification of 30,000 to obtain a second image. Next, the electrode is embedded with a resin, and cut along the normal line direction of the surface of the substrate with a diamond wire saw or the like to expose the cross section of the substrate. The cross section of the substrate is observed with a magnification of 30,000 to obtain a third image. The presence of the scales in the second image and the presence of the scales protruding from the surface of the substrate in the third image are confirmed to confirm that the electrode contains the scale-like protruding parts provided on the surface of the substrate. An example of the first image, the second image, and the third image of the electrode of Embodiment 1 is respectively shown in Fig. 1, Fig. 2, and Fig. 3.

Fig. 1 shows the electrode of Embodiment 1, and is an example of the first image obtained by observing an electrode with the substrate that has a shape of a three-dimensional network porous body with a magnification of 300. In Fig. 1, a region in white to pale gray is the presence region of the substrate, and a region in dark gray to black shows pores.

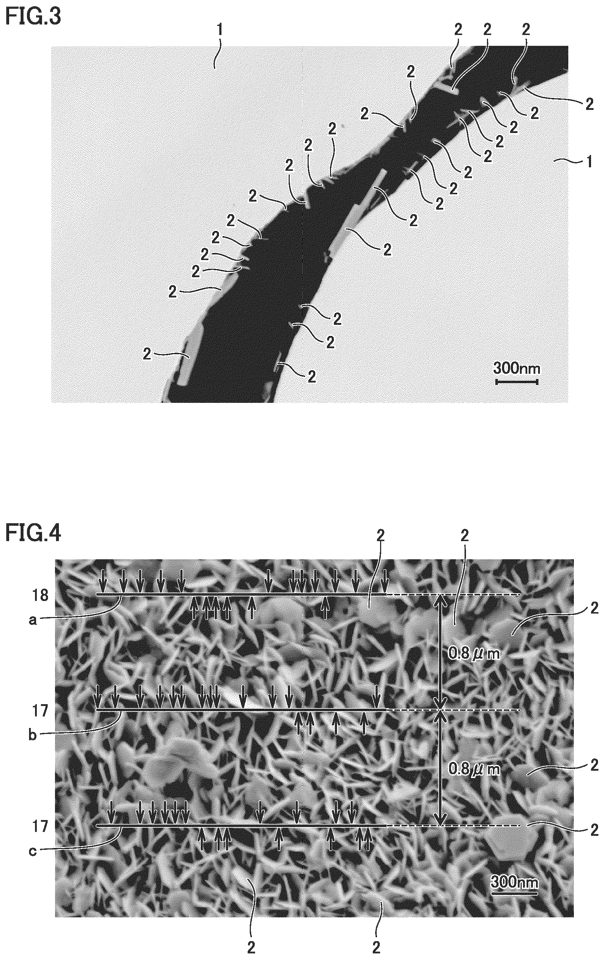

Fig. 2 is the second image obtained by observing the presence region of the substrate in Fig. 1 with a magnification of 30,000. In Fig. 2, dense presence of a plurality of scales 2 is observed. In Fig. 3, presence of the plurality of scales 2 with protruding from the surface of a substrate 1 is observed. From Fig. 2 and Fig. 3, it is confirmed that the electrode of Embodiment 1 contains the scale-like protruding parts provided on the surface of substrate 1. The scale herein means a scale-shaped strip. On the surface of substrate 1, when the plurality of scales 2 are present with protruding from the surface of substrate 1, the specific surface area of the electrode can be increased compared with a case of absence of the scales. Thus, arrangement of the plurality of scales 2 is not particularly limited on the surface of substrate 1. For example, as shown in Fig. 2 and Fig. 3, angles formed with the surface of substrate 1 and the protruding directions of scales 2 are not necessarily same. The angles formed with the surface of substrate 1 and the protruding directions of scales 2 may be each more than 0° and 90° or less. On the main surface of substrate 1, the plurality of scales 2 are not necessarily aligned with a same direction of main surfaces thereof. On the surface of the substrate, arrangement of the plurality of the scale-like protruding parts may be random.

In the second image of Fig. 2, scales that have a hexagonal main surface are observed. These hexagonal scales are presumably formed with hexagonal nickel hydroxide (Ni(OH)₂).

With reference to Fig. 2 and Fig. 3, as for the size of each scale, it is confirmed that the maximum diameter is about 50 nm or more and 1000 nm or less, and the maximum thickness is about 2 nm or more and 100 nm or less. The maximum diameter of each scale is preferably 50 nm or more and 1000 nm or less, more preferably 80 nm or more and 800 nm or less, and further preferably 100 nm or more and 600 nm or less. The maximum thickness of each scale is preferably 20% or less of the maximum diameter. Specifically, the maximum thickness of each scale is preferably 1 nm or more and 200 nm or less, more preferably 2 nm or more and 160 nm or less, and further preferably 3 nm or more and 100 nm or less. In the electrode of Embodiment 1, at least a part of the plurality of the scales preferably has the maximum diameter of 50 nm or more and 1000 nm or less and the maximum thickness of 1 nm or more and 200 nm or less, more preferably has the maximum diameter of 80 nm or more and 800 nm or less and the maximum thickness of 2 nm or more and 160 nm or less, and further preferably has the maximum diameter of 100 nm or more and 600 nm or less and the maximum thickness of 3 nm or more and 100 nm or less. Here, the at least a part of the plurality of the scales preferably refers to 5% or more, preferably 10% or more, preferably 20% or more, preferably 50% or more, preferably 80% or more, and preferably 100% of the scales observed in the second image.

In the electrode of Embodiment 1, a number of the scale-like protruding parts is preferably 5 or more per 2 µm in the image in which the surface of the electrode is observed by using a field-emission scanning electron microscope with a magnification of 30,000. This further increases the specific surface area of the electrode. Here, "the number of the scale-like protruding parts per 2 µm in the image in which the surface of the electrode is observed by using a field-emission scanning electron microscope with a magnification of 30,000" is measured in the following procedure.

The surface of the electrode is observed by using the field-emission scanning electron microscope with a magnification of 30,000 to obtain an image. This image corresponds to the above second image. The measurement field of this second image is 2.4 µm × 3.5 µm.

In the second image, three parallel straight lines are drawn so as not to overlap each other. A distance between the straight lines is 0.8 µm. A length of the straight lines may be any of 2 µm or more. The position of the straight lines may be appropriately set. A number of scale-like protruding parts where each of the straight lines cross is counted. Fig. 4 is a view for describing the method for measuring the number of the scale-like protruding parts, and is a view in which the three parallel straight line "a", straight line "b", and straight line "c" are drawn in the second image. The straight line "a", the straight line "b", and the straight line "c" are each represented by a solid line, the distance between the straight line "a" and the straight line "b" is 0.8 µm, and the distance between the straight line "b" and the straight line "c" is 0.8 µm. It is observed that a number of the scale-like protruding parts where the straight line "a" crosses is 18, a number of the scale-like protruding parts where the straight line "b" crosses is 17, and a number of the scale-like protruding parts where the straight line "c" crosses is 17.

For each of the straight lines, [the number of the scale-like protruding parts where the straight line crosses / the length of the straight line (µm)] × 2 is calculated to obtain a number of the scale-like protruding parts where the straight line with 2 µm in length crosses. An average of "the number of the scale-like protruding parts where the straight line with 2 µm in length crosses" for the three straight lines (hereinafter, referred to as "first average") is calculated.

**In** three of the second images photographed with regions not overlapping each other, the measurement same as above is performed to calculate the first average in each of the second images. An average of the first averages of the total three of the second images (hereinafter, referred to as "second average") is calculated. This second average corresponds to "the number of the scale-like protruding parts per 2 µm in the image in which the surface of the electrode is observed by using a field-emission scanning electron microscope with a magnification of 30,000".

The number of the scale-like protruding parts per 2 µm is preferably 5 or more, more preferably 8 or more, and further preferably 10 or more from the viewpoint of increase in the specific surface area. An upper limit of the number of the scale-like protruding parts per 2 µm is not particularly limited, and may be 30 or less, for example. The number of the scale-like protruding parts per 2 µm is preferably 5 or more and 30 or less, more preferably 8 or more and 30 or less, and further preferably 10 or more and 30 or less.

As far as the applicant performs the measurement, it has been confirmed that a given setting of the measurement region of the second image and the position of the three lines drawn in the second image does not cause uneven measurement results.

A surface-area increasing rate of the electrode of Embodiment 1 is 8% or more, and the surface-area increasing rate is preferably measured with an atomic force microscope. This further increases the specific surface area of the electrode.

The surface-area increasing rate of the electrode refers to an increasing rate of the surface area relative to an area of a measurement region. With a plane surface, the surface-area increasing rate is 0%. The area of the measurement region herein is a square with 750 nm × 750 nm. The measurement condition is a measurement mode: tapping mode, scanning speed: 0.7 Hz, probe tip curvature diameter: 8 nm, and scanning rotation: 90°.

A lower limit of the surface-area increasing rate of the electrode is preferably 8% or more, more preferably 10% or more, and further preferably 12% or more from the viewpoint of increase in the specific surface area. An upper limit of the surface increasing rate of the electrode is not particularly limited, and may be 300% or less as an example. The surface increasing rate of the electrode is preferably 8% or more and 300% or less, more preferably 10% or more and 300% or less, and further preferably 12% or more and 300% or less.

The electrode of Embodiment 1 preferably comprises a first main surface and a second main surface on an opposite side to the first main surface, a carbon tape for evaluation preferably contains scale-like adhering materials, the carbon tape for evaluation being obtained by adhering a rectangular carbon tape with 5 mm × 5 mm to each of the first main surface and the second main surface and then peeling the carbon tape from the first main surface and the second main surface, and at least one of the adhering materials preferably has a maximum diameter of 50 nm or more and a maximum thickness of 20% or less of the maximum diameter. The scale-like adhering material contained in the carbon tape for evaluation corresponds to at least a part of the scale-like protruding parts provided on the surface of the substrate of the electrode. Accordingly, the scale-like protruding parts provided on the surface of the substrate of the electrode can be confirmed by confirming the carbon tape for evaluation that contains the scale-like adhering material. In addition, it is considered that an approximate shape of the scale-like protruding parts can be presumed by measuring the maximum diameter and thickness of the scale-like adhering material. For example, when the maximum diameter of the scale-like adhering material is 50 nm or more and the maximum thickness is 20% or less of the maximum diameter, the scale-like protruding parts that correspond to the scale-like adhering material is presumed to be flat strip.

The maximum diameter of the scale-like adhering material is preferably 50 nm or more and 1000 nm or less, more preferably 80 nm or more and 800 nm or less, and further preferably 100 nm or more and 600 nm or less. The maximum thickness of the scale-like adhering material is preferably 20% or less of the maximum diameter. The maximum thickness of the scale-like adhering material is preferably 1 nm or more and 200 nm or less, more preferably 2 nm or more and 150 nm or less, and further preferably 3 nm or more and 100 nm or less. In the electrode of Embodiment 1, at least a part of the scale-like adhering material preferably has the maximum diameter of 50 nm or more and 1000 nm or less and the maximum thickness of 1 nm or more and 200 nm or less, more preferably has the maximum diameter of 80 nm or more and 800 nm or less and the maximum thickness of 2 nm or more and 150 nm or less, and further preferably has the maximum diameter of 100 nm or more and 600 nm or less and the maximum thickness of 3 nm or more and 100 nm or less. Here, the at least a part of the scale-like adhering material preferably refers to one or more, preferably 5% or more, preferably 10% or more, preferably 20% or more, preferably 50% or more, preferably 80% or more, and preferably 100% of the adhering material adhering to the carbon tape for evaluation.

As the carbon tape, a carbon double-sided tape for SEM manufactured by New EM Co., Ltd. is used. When adhering to the first main surface and the second main surface, the carbon tape is pressed at 8 kPa to 25 kPa. The carbon tape for evaluation is observed by using a field-emission scanning electron microscope (FE-SEM, acceleration voltage: 3.0 kV, irradiation current: 1.0 nA) with a magnification of 50000 to specify the scale-like adhering material. The maximum diameter of the adhering material is measured. The thickness of the adhering material is measured by observing a cross section of a resin-embedded and processed carbon tape by similarly using the field-emission scanning electron microscope with a magnification of 50,000.

At the beginning, the present inventors tried to directly measure the electrode to determine the specific shape and size of the scale-like protruding parts provided on the surface of the substrate of the electrode. However, it was difficult to accurately measure the specific shape of the scale-like protruding parts, for example, the maximum diameter and thickness of the main surface, with the present resolution of the field-emission scanning electron microscope (about 50,000 in maximum). Accordingly, in the present disclosure, measurement of the size of the scale-like adhering material adhering to the carbon tape for evaluation obtained by adhering the rectangular carbon tape with 5 mm × 5 mm to each of the first main surface and the second main surface of the electrode and then peeling the carbon tape from the first main surface and the second main surface is used as an indicator for the thickness and the thickness of the main surface of the scale-like protruding parts provided on the surface of the substrate of the electrode.

The surface of the electrode of Embodiment 1 preferably contains nickel. This allows the scale-like protruding parts to be formed on the surface to contain nickel to yield high activity for oxygen generation and hydrogen generation. The surface of the electrode that contains nickel can be confirmed by surface analysis of the surface of the electrode by using SEM-EDX.

In the electrode of Embodiment 1, the shape of the substrate is not particularly limited as long as the shape can be used as the electrode. Examples of the shape of the substrate include a plate, a secondary structure porous body, a three-dimensional porous body, and a mesh. Among these, the three-dimensional porous body is preferable because of a large specific surface area.

As the plate substrate, conventionally known substrates may be used. Examples thereof include a metal plate made of nickel (Ni plate) and a metal plate made of nickel plating. A thickness of the plate substrate may be, for example, 0.3 mm or more and 1.2 mm or less.

Examples of the substrate that has the two-dimensional structure porous shape include punching metal and expand metal. As the punching metal and expand metal, conventionally known metals may be used. Examples thereof include Ni expand metal that has a center diameter in a mesh short direction of 2 mm to 7 mm, a center diameter in a mesh long direction of 4 mm to 14 mm, and a thickness of 0.5 mm to 1.5 mm.

As the substrate that has the three-dimensional structure porous shape, conventionally known substrates may be used. Examples thereof include a three-dimensional network porous body (for example, "Celmet" (R) produced by Sumitomo Electric Industries, Ltd.), a porous body of sintered metal powder, and a porous body of sintered metal fiber (metal nonwoven fabric). Among these, a three-dimensional network porous body as described in PTL 1 (WO 2019/163256) is preferable because of a large specific surface area.

As the mesh-like substrate, conventionally known substrates may be used. Examples thereof include a Ni mesh that has a mesh number of 20 to 60 (40 to 60 per inch) and a line diameter of 0.1 mm to 0.3 mm.

### <Method for Manufacturing Electrode>

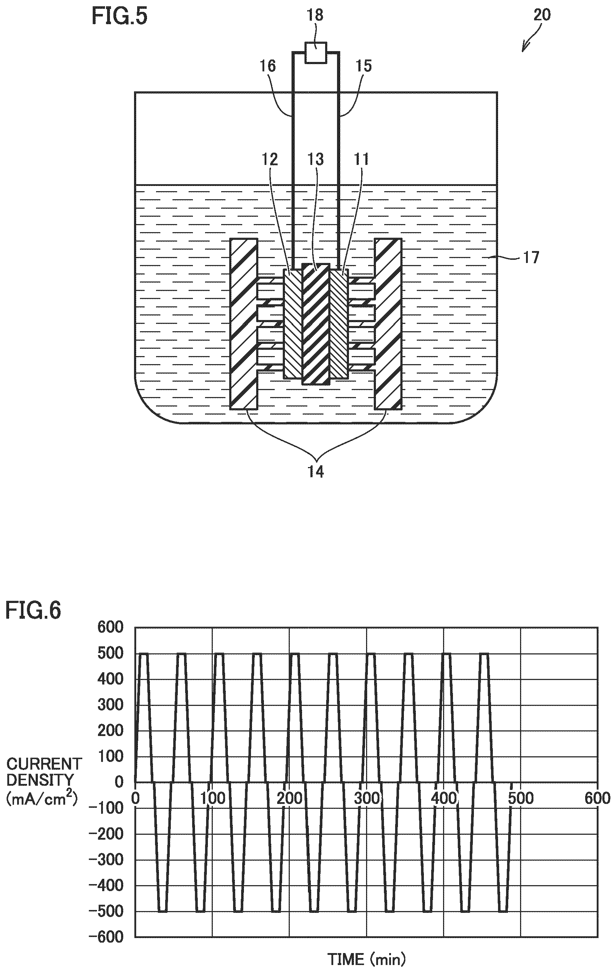

A method for manufacturing the electrode of Embodiment 1 will be described. Fig. 5 is a schematic view of an example of an electrode-manufacturing device 20 used for the method for manufacturing the electrode of Embodiment 1. Electrode-manufacturing device 20 illustrated in Fig. 5 has: a diaphragm 13; a working electrode 12 provided on one main surface of diaphragm 13; a counter electrode 11 provided on a main surface of diaphragm 13, which is an opposite side to the main surface on which working electrode 12 is provided; a tool 14 to press each of working electrode 12 and counter electrode 11 against diaphragm 13; and a power source 18 to supply current to working electrode 12 and counter electrode 11. The configuration of electrode-manufacturing device 20 illustrated in Fig. 5 is zero-gap.

As diaphragm 13, conventionally known materials may be used. As diaphragm 13, Zirfon Perl UTP 500, manufactured by AGFA Materials Japan LTD., may be used, for example. On working electrode 12, a precursor of the substrate of the electrode is provided. In electrode-manufacturing device 20 in Fig. 5, examples of the precursor of the substrate include a secondary structure porous body, a three-dimensional structure porous body, or a mesh, which has the surface that contains at least nickel. The surface of the precursor of the substrate may contain nickel oxide or nickel hydroxide as a natural oxide film of nickel.

On counter electrode 11, any one of the aforementioned precursor of the substrate may be provided. As tool 14, a polypropylene tool that has arranged protrusions may be used. For example, tool 14 receives pressure with a spring to press each of working electrode 12 and counter electrode 11 against diaphragm 13.

Working electrode 12 and counter electrode 11 are immersed in a potassium **hydroxide** (KOH) aqueous solution 17 at 80°C (KOH concentration: 0.1 to 13.5 mol/L) to perform forward/reverse inversion electrolysis. This forms the scale-like protruding parts on the surface of the precursor of the substrate to yield the electrode of Embodiment 1.

**In** the present disclosure, the forward/reverse inversion electrolysis is performed by alternately supplying a forward current and a reverse current through the working electrode. Fig. 6 is a graph that indicates an example of a relationship between a density of current that flows in the working electrode and a time in the forward/reverse inversion electrolysis. **In** the graph of Fig. 6, the horizontal axis indicates a time (min) from the beginning of the forward/reverse inversion electrolysis, and the vertical axis indicates a current density (mA/cm²). The graph of Fig. 6 indicates performing 10 cycles, and one cycle is: firstly supplying 500 mA/cm² through the working electrode for a certain time; and subsequently supplying a reverse current at -500 mA/cm² for a certain time. An absolute value of each of intensities of the forward current and the reverse current may be equal to or different from each other. The forward current is preferably 100 to 2000 mA/cm². The reverse current is preferably 100 to 2000 mA/cm². The time of supplying the forward current and the time of supplying the reverse current may be equal to or different from each other. The time of supplying the forward current is preferably 3 to 30 minutes. The time of supplying the reverse current is preferably 5 to 45 minutes. The time of supplying the forward current and the time of supplying the reverse current may be different in each cycle. Regardless of the intensity of the current and the supplying time, when the electric quantity of the forward current is C1 and the electric quantity of the reverse current is C2, C1 and C2 preferably satisfy C1 ≤ C2 in each cycle.

A mechanism of forming the scale-like protruding parts on the surface of the precursor of the substrate by performing the forward/reverse inversion electrolysis is unclear. A mechanism presumed by the present inventors is as follows. Supplying the forward current through the working electrode forms an oxide and/or a hydroxide of nickel present on the surface of the precursor of the substrate (nickel oxide and/or nickel hydroxide). Subsequently supplying the reverse current through the working electrode peels a part of the nickel oxide and/or the nickel hydroxide. It is presumed that repetition of these forms the scale-like protruding parts on the surface of the substrate.

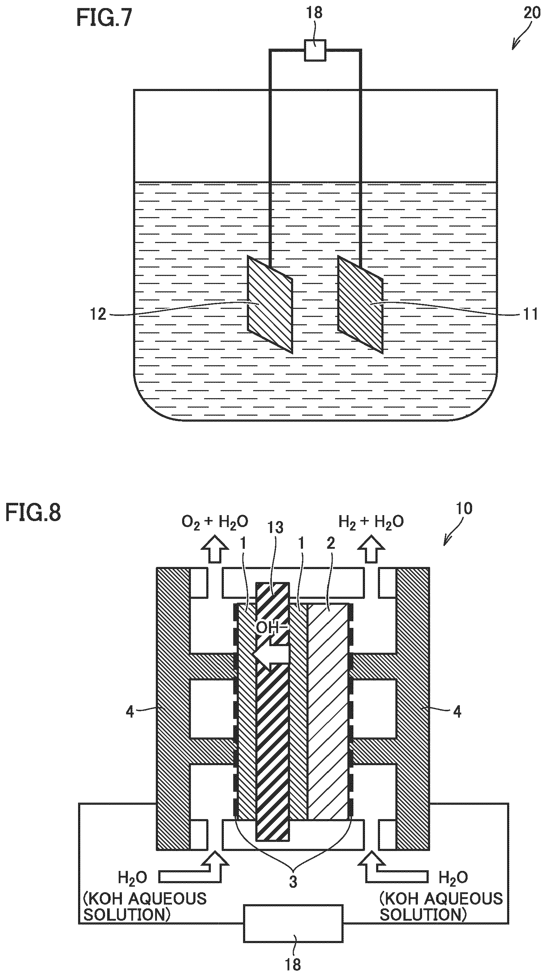

Fig. 7 is a schematic view of another example of electrode-manufacturing device 20 used for the method for manufacturing the electrode of Embodiment 1. Electrode-manufacturing device 20 illustrated in Fig. 7 has: a working electrode 12; a counter electrode 11; and a power source 18 for supplying current to working electrode 12 and counter electrode 11. One main surface of working electrode 12 and one main surface of counter electrode 11 face to each other, and a gap is present therebetween. The configuration of electrode-manufacturing device 20 illustrated in Fig. 7 is structure with gap.

On working electrode 12, a precursor of the substrate of the electrode is provided. In electrode-manufacturing device 20 of Fig. 7, examples of the precursor of the substrate include a plate having a surface containing at least nickel. On counter electrode 11, any one of the precursor of the substrate described in electrode-manufacturing device 20 of Fig. 5 may be provided.

Working electrode 12 and counter electrode 11 are immersed in a KOH aqueous solution 17 (KOH concentration: 7 mol/L) at 80°C to perform forward/reverse inversion electrolysis. This forms the scale-like protruding parts on the surface of the precursor of the substrate to yield the electrode of Embodiment 1. As the condition of the forward/reverse inversion electrolysis, the condition same as the condition described in electrode-manufacturing device 20 of Fig. 5 may be applied.

### [Embodiment 2: Alkaline Water Electrolysis Apparatus]

An example of an alkaline water electrolysis apparatus of one embodiment (hereinafter, also referred to as "Embodiment 2") of the present disclosure will be described by using Fig. 8. The alkaline water electrolysis apparatus of the present disclosure has the electrode of Embodiment 1. The alkaline water electrolysis apparatus of the present disclosure can reduce electric power required for hydrogen generation.

An alkaline water electrolysis apparatus 10 of Embodiment 2 has: a diaphragm 13; a cathode 21 provided on one main surface of diaphragm 13; an anode 22 provided on the other main surface of diaphragm 13, which is on an opposite side to the main surface on which cathode 21 is provided; a pair of current collectors 3 provided on the respective main surfaces of cathode 21 and anode 22, which are on the opposite sides with respect to diaphragm 13; and a pair of bipolar plates 4 pressing each of current collectors 3 onto a side of diaphragm 13. Between cathode 21 and current collector 3, an elastic body 23 made of metal may be provided.

On the cathode and the anode of the alkaline water electrolysis apparatus, electrolysis reactions represented by the following reaction formulae occur.
Cathode:

   2H₂O + 2e⁻ → H₂ + 2OH⁻
Anode:

   2OH⁻ → 0.5O₂ + H₂O + 2e⁻

Alkaline water electrolysis apparatus 10 of Embodiment 2 uses the electrode of Embodiment 1 as either or both of cathode 21 and anode 22. According to this, the alkaline water electrolysis apparatus can reduce required electric power. Particularly, use of the electrode of Embodiment 1 for anode 22 improves the effect of reducing the required electric power.

### [Supplement 1]

An electrode, comprising:
a substrate that has a surface composed of at least one of nickel, nickel oxide, and nickel hydroxide; and
scale-like protruding parts provided on the surface of the substrate.

### [Supplement 2]

The electrode according to Supplement 1, wherein
a surface-area increasing rate of the electrode is 8% or more, and
the surface-area increasing rate is measured with an atomic force microscope.

### [Supplement 3]

The electrode according to Supplement 1 or 2, wherein, in an image in which **the surface** is observed by using a field-emission scanning electron microscope with a magnification of 30,000, a number of the scale-like protruding parts is 5 or more per 2 µm.

### [Supplement 4]

The electrode according to any one of Supplements 1 to 3, wherein
the electrode comprises a first main surface and a second main surface on an opposite side to the first main surface,
a carbon tape for evaluation contains scale-like adhering materials, the carbon tape for evaluation being obtained by adhering a rectangular carbon tape with 5 mm × 5 mm to each of the first main surface and the second main surface and then peeling the carbon tape from the first main surface and the second main surface, and
at least one of the adhering materials has a maximum diameter of 50 nm or more and a maximum thickness of 20% or less of the maximum diameter.

### [Supplement 5]

The electrode according to any one of Supplements 1 to 4, wherein a surface of the electrode contains nickel.

### [Supplement 6]

The electrode according to any one of Supplements 1 to 5, wherein a shape of the substrate is a plate, a two-dimensional porous body, a three-dimensional porous body, or a mesh.

### [Supplement 7]

The electrode according to Supplement 6, wherein the shape of the substrate is the three-dimensional porous body.

### [Supplement 8]

An alkaline water electrolysis apparatus, comprising the electrode according to any one of Supplements 1 to 7.

### EXAMPLES

The present embodiments will be further specifically described with Examples. However, the present embodiments are not limited by these Examples.

### <Production of Electrode>

### <<Preparation of Substrate>>

As a substrate of each Sample, substrates with the following types were prepared.
Sample 1 and Sample 2: three-dimensional network porous body made of nickel ("Ni Celmet (R) #8", manufactured by Sumitomo Electric Industries, Ltd. (pore diameter: 450 µm) was pressed to 0.5 mm in thickness for use. Size: 20 mm × 20 mm × 0.5 mm, referred to as "Ni Celmet" in Table 1)
Sample 3: mesh made of nickel (line diameter: 0.15 mm, 40 mesh, size: 20 mm × 20 mm × 0.3 mm, referred to as "Ni mesh" in Table 1)
Sample 4: expand metal made of nickel (LW 8 mm, SW 4 mm, size: 20 mm × 20 mm × 1 mm, referred to as "Ni expand metal" in Table 1)
Sample 5: punching metal of nickel-plated steel plate (size: 20 mm × 20 mm × 0.3 mm, referred to as "Ni-plated punching metal" in Table 1)
Sample 6 and Sample 7: plate made of nickel (size: 20 mm × 20 mm × 0.3 mm, referred to as "Ni plate" in Table 1)

The above substrates are conventionally used as an electrode. In the present Examples, the above substrates are referred to as "conventional electrode".

A surface-area increasing rate of each substrate was measured with an atomic force microscope. The specific measurement method was as described in Embodiment 1. The results are shown in the column "Surface-area increasing rate" of "Substrate" in Table 1.

### <<Forward/Reverse Inversion Electrolysis>>

With Sample 1 to Sample 5, electrode-manufacturing device 20 that had the configuration illustrated in Fig. 5 was used for producing an electrode. The configuration of electrode-manufacturing device 20 illustrated in Fig. 5 was zero-gap. With Sample 6 and Sample 7, electrode-manufacturing device 20 that had the configuration illustrated in Fig. 7 was used for producing an electrode. The configuration of electrode-manufacturing device 20 illustrated in Fig. 7 was with gap.

The substrate prepared above was provided on working electrode 12 of the device illustrated in Fig. 5 or Fig. 7. On counter electrode 11, the substrate same as any one of the substrates prepared above was provided. The substrate used for the counter electrode in each Sample are shown in the column "Counter electrode" of "Production condition of electrode" in Table 1.

The working electrode and the counter electrode were immersed in a KOH aqueous solution (KOH concentration: 8 mol/L) at 80°C, and electrolysis was performed at 0.6 A/cm² for 1 minute so that the working electrode became a positive electrode. A voltage (electrolysis voltage) at this time was measured. The results are shown in the column "Voltage before treatment" of "Substrate" in Table 1.

Thereafter, forward/reverse inversion electrolysis was performed according to a current pattern shown in the column "Current pattern" of "Production condition of electrode" in Table 1. For example, with Sample 1, 10 cycles were performed, and one cycle was: supplying a forward current of 500 mA/cm² through the working electrode for 10 minutes; and subsequently supplying a reverse current of -500 mA/cm² for 10 minutes. This yielded an electrode of each Sample.

### [Table 1]

**Table 1**

| Sample No | Substrate | | | Production condition of electrode | | | | | |
|---|---|---|---|---|---|---|---|---|---|
| | Type | Voltage before treatment | Surface-area increasing rate | Working electrode | Counter electrode | Current pattern | | | Manufacturing device |
| | | (V) | (%) | | | Forward current | Reverse current | Number of cycles | |
| 1 | Ni Celmet | 2.371 | 1.0 | Ni Celmet | Ni expand metal | 500 mA/cm² 10 min | -500 mA/cm² 10 min | 10 | Fig. 5 |
| 2 | Ni Celmet | 2.374 | 1.2 | Ni Celmet | Ni expand metal | 1000 mA/cm² 10 min | -1000 mA/cm² 10 min | 10 | Fig. 5 |
| 3 | Ni mesh | 2.409 | 0.3 | Ni mesh | Ni expand metal | 500 mA/cm² 10 min | -500 mA/cm² 10 min | 10 | Fig. 5 |
| 4 | Ni expand metal | 2.397 | 0.6 | Ni expand metal | Ni expand metal | 500 mA/cm² 10 min | -500 mA/cm² 10 min | 10 | Fig. 5 |
| 5 | Ni-plated punching metal | 2.472 | 0.4 | Ni-plated punching metal | Ni expand metal | 500 mA/cm² 10 min | -500 mA/cm² 10 min | 10 | Fig. 5 |
| 6 | Ni plate | 2.582 | 0.8 | Ni plate | Ni Celmet | 500 mA/cm² 10 min | -500 mA/cm² 10 min | 10 | Fig. 7 |
| 7 | Ni plate | 2.586 | 0.4 | Ni plate | Ni Celmet | 150 mA/cm² 10 min | -150 mA/cm² 10 min | 10 | Fig. 7 |

### <Evaluation of Electrode>

Thereafter, electrolysis was performed again at 0.6 A/cm² for 1 minute so that the working electrode became a positive electrode. A voltage (electrolysis voltage) at this time was measured. The results are shown in the column "Voltage after treatment" in Table 2. With each Sample, a difference between the voltage before treatment and the voltage after treatment was calculated. The results are shown in the column "Voltage changing amount" in Table 2.

For the electrode of each Sample, a surface-area increasing rate was measured with an atomic force microscope. The specific measurement method was as described in Embodiment 1. The results are shown in the column "Surface-area increasing rate" in Table 2.

A surface and cross section of the electrode of each Sample were observed by using an FE-SEM (field-emission scanning electron microscope, acceleration voltage: 3.0 kV, irradiation current: 1.0 nA) with a magnification of 30,000 to obtain a second image and a third image. From the second image and the third image, all the Samples were confirmed to contain scale-like protruding parts provided on the surface of the substrate. Further, in the second image, a number of the scale-like protruding parts per 2 µm was measured. The specific measurement method was as described in Embodiment 1. The results are shown in the column "Number of scale-like protruding parts" in Table 2.

The cross section of the substrate of the electrode of each Sample was analyzed by using SEM-EDX to measure composition of the substrate surface. The surface of the electrode of each Sample was analyzed by using SEM-EDX to measure composition of the electrode surface. The specific measurement method was as described in Embodiment 1. The results are shown in the columns "Composition of substrate surface" and "Composition of electrode surface" in Table 1. It was confirmed that, on the surface of the substrate of Sample 1 to Sample 7, only nickel, oxygen, and carbon were present. Thus, the surface of the substrate of Sample 1 to Sample 7 was determined to be composed of at least one of nickel, nickel oxide, and nickel hydroxide. It was confirmed that, on the surface of the electrode of Sample 1 to Sample 7, nickel was present.

The carbon tape for evaluation was obtained by adhering a rectangular carbon tape with 5 mm × 5 mm to each of the first main surface and the second main surface, which was opposite side of the first main surface, of the electrode of each Sample, and then peeling the carbon tape from the first main surface and the second main surface. The carbon tape for evaluation was observed by using a field-emission scanning electron microscope (FE-SEM, acceleration voltage: 3.0 kV, irradiation current: 1.0 nA) with a magnification of 50,000 to check presence or absence of a scale-like adhering material that had a maximum diameter of 50 nm or more and a maximum thickness of 20% or less of the maximum diameter. The specific measurement method was described in Embodiment 1. The results are shown in the column "Presence or absence of carbon tape / adhering material" in Table 2.

### [Table 2]

**Table 2**

| Sample No | Electrode | | | | | | |
|---|---|---|---|---|---|---|---|
| | Voltage after treatment | Voltage changing amount | Surface-area increasing rate | Number of scale-like protruding parts | Presence of carbon tape / adhering material | Composition of substrate surface | Composition of electrode surface |
| | (V) | (mV) | (%) | (per 2 µm) | | at.% | at.% |
| 1 | 2.168 | -203 | 82 | 14 | Yes | Ni: 80.8 | Ni: 23.8 |
| | | | | | | O: 1.6 | O: 55.5 |
| | | | | | | C: 17.6 | C: 20.7 |
| 2 | 2.157 | -217 | 110 | 16 | Yes | Ni: 80.6 | Ni: 24.2 |
| | | | | | | O: 2.2 | O: 57.2 |
| | | | | | | C: 17.2 | C: 18.6 |
| 3 | 2.209 | -200 | 33 | 13 | Yes | Ni: 77.9 | Ni: 21.5 |
| | | | | | | O: 2.8 | O: 61.9 |
| | | | | | | C: 19.3 | C: 16.6 |
| 4 | 2.256 | -141 | 62 | 17 | Yes | Ni: 76.5 | Ni: 22.5 |
| | | | | | | O: 2.6 | O: 59.8 |
| | | | | | | C: 20.9 | C: 17.7 |
| 5 | 2.327 | -145 | 44 | 17 | Yes | Ni: 75.7 | Ni: 23.6 |
| | | | | | | O: 2.9 | O: 57.9 |
| | | | | | | C: 21.4 | C: 18.5 |
| 6 | 2.380 | -202 | 25 | 19 | Yes | Ni: 79.6 | Ni: 22.4 |
| | | | | | | O: 2.2 | O: 60.4 |
| | | | | | | C: 18.2 | C: 17.2 |
| 7 | 2.326 | -260 | 32 | 20 | Yes | Ni: 78.9 | Ni: 13.1 |
| | | | | | | O: 2.4 | O: 63.8 |
| | | | | | | C: 18.7 | C: 23.1 |

### < Discussions>

The electrodes of Sample 1 to Sample 7 correspond to Examples. It was confirmed that the electrodes of Sample 1 to Sample 7 contained the scale-like protruding parts provided on the surface of each substrate. This means that the electrodes of Sample 1 to Sample 7 have a large specific surface area compared with each of the conventional electrodes that have no scale-like protruding parts (the substrates before the forward/reverse inversion electrolysis in each Sample). It was confirmed that the electrodes of Sample 1 to Sample 7 had a large surface-area increasing rate compared with each of the conventional electrodes. It was confirmed that the electrodes of Sample 1 to Sample 7 exhibited a lowered voltage (electrolysis voltage) and reduced required electric power compared with each of the conventional electrodes. This is presumably because the electrodes of Sample 1 to Sample 7 have a large specific surface area compared with the conventional electrodes to increase reaction points, and thereby a current density on the surface decreases. When the electrodes of Sample 1 to Sample 7 are used as the electrode of the alkaline water electrolysis apparatus, the electric power required for hydrogen generation is reduced.

The electrodes of Sample 1 and Sample 2 exhibited a particularly lowered voltage (electrolysis voltage) after treatment compared with the other Samples. Thus, when the electrodes of Sample 1 and Sample 2 are used as the electrode of the alkaline water electrolysis apparatus, the effect of reducing the electric power required for hydrogen generation is particularly excellent.

The embodiments and Examples of the present disclosure have been described as above, but it is anticipated in advance that the aforementioned configurations of embodiments and Examples are appropriately combined or variously modified.

The embodiments and Examples disclosed herein are examples in all points, and should not be limitative. The scope of the present invention is determined by not the above embodiments nor Examples but the claims, and intended to include meaning equivalent to the claims and all modification within the scope.

### REFERENCE SIGNS LIST

1 Substrate; 2 Scale; 3 Current collector; 4 Bipolar plate; 10 Alkaline water electrolysis apparatus; 11 Counter electrode; 12 Working electrode; 13 Diaphragm; 14 Tool; 17 Potassium hydroxide aqueous solution; 18 Power source; 20 Electrode-manufacturing device; 21 Cathode; 22 Anode; 23 Elastic body.

## Claims

1. An electrode, comprising:
a substrate that has a surface composed of at least one of nickel, nickel oxide, and nickel hydroxide; and
scale-like protruding parts provided on the surface of the substrate.

2. The electrode according to claim 1, wherein
a surface-area increasing rate of the electrode is 8% or more, and
the surface-area increasing rate is measured with an atomic force microscope.

3. The electrode according to claim 1 or 2, wherein, in an image in which the surface is observed by using a field-emission scanning electron microscope with a magnification of 30,000, a number of the scale-like protruding parts is 5 or more per 2 µm.

4. The electrode according to any one of claims 1 to 3, wherein
the electrode comprises a first main surface and a second main surface on an opposite side to the first main surface,
a carbon tape for evaluation contains scale-like adhering materials, the carbon tape for evaluation being obtained by adhering a rectangular carbon tape with 5 mm × 5 mm to each of the first main surface and the second main surface and then peeling the carbon tape from the first main surface and the second main surface, and
at least one of the adhering materials has a maximum diameter of 50 nm or more and a maximum thickness of 20% or less of the maximum diameter.

5. The electrode according to any one of claims 1 to 4, wherein a surface of the electrode contains nickel.

6. The electrode according to any one of claims 1 to 5, wherein a shape of the substrate is a plate, a two-dimensional porous body, a three-dimensional porous body, or a mesh.

7. The electrode according to any one of claims 1 to 5, wherein a shape of the substrate is a three-dimensional porous body.

8. An alkaline water electrolysis apparatus, comprising the electrode according to any one of claims 1 to 7.
